# EUROPÄISCHE PATENTSCHRIFT

(11) **EP 0 941 164 B1**
(45) Veröffentlichungstag und Bekanntmachung des Hinweises auf die Patenterteilung: **01.10.2003**
(21) Anmeldenummer: 98945075.4
(22) Anmeldetag: 30.07.1998
(51) Int. Cl.: B60K 41/14

(54) **VORRICHTUNG UND VERFAHREN ZUR VERSTELLUNG DER ÜBERSETZUNG EINES CVT**
DEVICE AND METHOD FOR ADJUSTING THE TRANSMISSION RATIO OF A CVT
DISPOSITIF ET PROCEDE POUR LE REGLAGE DU RAPPORT D'UNE TRANSMISSION A CHANGEMENT DE VITESSES CONTINU

(30) Priorität: 30.09.1997 DE 19743058
(43) Veröffentlichungstag der Anmeldung: 15.09.1999
(73) Patentinhaber: ROBERT BOSCH GMBH, 70442 Stuttgart (DE)
(72) Erfinder: BOLZ, Martin-Peter, D-71720 Oberstenfeld (DE); LUH, Joachim, D-74321 Bietigheim (DE); HÜSLER, Holger, D-70329 Stuttgart (DE)
(86) Internationale Anmeldenummer: DE9802182
(87) Internationale Veröffentlichungsnummer: WO99016635

(56) Entgegenhaltungen:
- EP-A- 0 274 080
- EP-A- 0 451 887
- US-A- 4 700 590
- US-A- 4 803 900
- US-A- 5 085 104
- US-A- 5 113 718
- US-A- 5 199 399

## Beschreibung

### Stand der Technik

Die Erfindung betrifft eine Vorrichtung und ein Verfahren zur Verstellung der Übersetzung eines CVT mit den Merkmalen der unabhängigen Ansprüche.

Kontinuierlich verstellbare Fahrzeuggetriebe, im allgemeinen als CVT bezeichnet, sind beispielsweise bekannt aus der EP,A1,0 451 887 und US-A-5199399, die als nächstliegender Stand der Technik angesehen wird. Solche CVT-Getriebe erlauben das Fahren bei niedrigen Motordrehzahlen. Die Verstellung der Übersetzung geschieht im allgemeinen hydraulisch, wobei der erforderliche Hydraulikdruck durch eine von dem Fahrzeugmotor angetriebene Hydraulikpumpe geliefert wird. Ein plötzliches und sehr starkes Bremsen kann jedoch dazu führen, daß das CVT-Getriebe unter Umständen beim Fahrzeugstillstand noch eine ralativ niedrige Übersetzung aufweist, weil das Pumpenfördervolumen bei niedrigen Motordrehzahlen in der zur Verfügung stehenden kurzen Bremszeit nicht ausreicht, um das Getriebe zu einer hohen Anfahrübersetzung hin zu verstellen. Steht das Fahrzeug still, so kann das Getriebe nicht verstellt werden, so daß es das Ziel sein muß, immmer kurz vor dem Stehenbleiben des Fahrzeugs die Anfahrübersetzung zu erreichen.

Um die Anfahrübersetzung am Ende eines Bremsvorgangs einzustellen, kann das Getriebe bei Erkennen einer starken Verzögerung so schnell wie möglich zu großen Übersetzungen hin verstellt werden. Da zwischen dem Fahrzeugmotor und dem CVT-Getriebe im allgemeinen ein Drehmomentenwandler angeordnet ist, der durch eine Wandlerüberbrückungskupplung überbrückt werden kann, ist in dem Moment, wo die Wandlerüberbrückungskupplung öffnet, die Motordrehzahl auf die Leerlaufdrehzahl abgesunken. Spätestens dann kann es sein, daß das Fördervolumen der Hydraulikpumpe nicht mehr ausreicht, um das Getriebe zu verstellen, so daß das Fahrzeug bei Übersetzungen, die kleiner als die Anfahrübersetzung sind, zum Stehen kommt.

Eine Möglichkeit, um dieses Problem zu lösen, besteht darin, daß während der Bremsung der Motor bei einer erhöhten Leerlaufdrehzahl betrieben wird. Dies kann jedoch nur ein sehr begrenzter Eingriff bleiben, da beim Verzögern des Fahrzeugs auf keinen Fall ein Vortriebsmoment durch Erhöhen der Motordrehzahl auf die Räder wirken darf.

Die Aufgabe der vorliegenden Erfindung besteht darin, die Anfahrübersetzung am Ende einer Bremsung sicher zu erreichen, ohne den eigentlichen Bremsvorgang zu verlängern.

Diese Aufgabe wird durch die Merkmale der unabhängigen Ansprüche gelöst.

### Vorteile der Erfindung

Wie schon beschrieben, geht die Erfindung von einem Getriebe aus, das zwischen einem Fahrzeugmotor und den Antriebsrädern eines Fahrzeugs angeordnet ist und in seiner Übersetzung stufenlos verstellbar ausgelegt ist. Dieses CVT-Getriebe weist eine Primär- und eine Sekundärseite auf, wobei wenigstens erste Sensormittel zur Erfassung der Drehzahl der Primärseite vorgesehen sind.

Der Kern der Erfindung besteht darin, daß ein Verzögerungszustand des Fahrzeugs vorgebbaren oder vorgegebenen Ausmaßes festgestellt wird. In Reaktion auf die Feststellung dieses Verzögerungszustandes wird die Ausgangsdrehzahl des Fahrzeugmotors abhängig von der erfaßten Drehzahl der Primärseite eingestellt. Dabei ist insbesondere vorgesehen, das weitere Sensormittel zur Erfassung der Ausgangsdrehzahl des Fahrzeugmotors vorhanden sind und die Ausgangsdrehzahl des Fahrzeugmotors im Sinne einer Regelung auf die erfaßte Drehzahl der Primärseite eingestellt wird.

Die Erfindung geht davon aus, daß während eines Bremsvorgangs durch den Fahrzeugmotor ein solches beschleunigtes Moment wirken darf, das genau so groß ist, daß über den Wandler keine der Bremsung entgegenwirkende Vortriebsleistung übertragen wird. Hierbei ist vorgesehen, daß zwischen dem Fahrzeugmotor und dem Getriebe ein Momentenwandler mit einer Wandlerüberbrückungskupplung angeordnet ist. In Reaktion auf die Feststellung des Verzögerungszustands wird die Wandlerüberbrückungskupplung geöffnet.

Ein hydrodynamischer Wandler überträgt genau dann keine Leistung, wenn die Ausgangs- und die Eingangsdrehzahl gleich sind, der Wandlerschlupf also Null ist. Es wird also während des Verzögerungs- bzw. Bremsvorgangs die Wandlereingangsdrehzahl, also die Motorausgangsdrehzahl, so geregelt, daß sie gleich der Wandlerausgangsdrehzahl, also der Getriebeeingangsdrehzahl ist. Damit ist die übertragene Leistung über den Wandler auf den Wert Null geregelt. Wird jetzt das Getriebe zu großen Übersetzungen hin verstellt, führt das dazu, daß der Fahrzeugmotor auf eine Drehzahl deutlich über der Leerlaufdrehzahl eingeregelt wird. Damit ist während des gesamten Bremsvorgangs sichergestellt, daß die Pumpenförderleistung groß genug ist, um das Getriebe schnell zu großen Übersetzungen hin zu verstellen. Außerdem ist sichergestellt, daß vom Fahrzeugmotor keine postivbeschleunigenden Kräfte am Rad ankommen.

Insbesondere ist vorgesehen, daß die Einstellung der Ausgangsdrehzahl des Fahrzeugmotors, also der Wandlereingangsdrehzahl, derart erfolgt, daß ein vorgebbarer oder vorgegebener Schwellwert nicht überschritten wird. Dies hat den Vorteil, daß der Motor nicht unnötig hoch dreht.

In einer weiteren Ausgestaltung der Erfindung ist vorgesehen, daß die von der erfaßten Drehzahl der Primärseite abhängige Einstellung der Ausgangsdrehzahl des Fahrzeugmotors nur dann geschieht, wenn die Ausgangsdrehzahl des Fahrzeugmotors und/oder die Drehzahl der Primärseite einen vorgegebenen oder vorgebbaren Schwellwert nicht unterschreitet. Sinkt also die Getriebeeingangsdrehzahl auf einen Wert, der um einen bestimmten Betrag größer ist als die Leerlaufdrehzahl, so wird die erfindungsgemäße Einstellung bzw. Regelung abgestellt.

Insbesondere ist vorgesehen, daß eine die Fahrzeuglängsgeschwindigkeit repräsentierende Verzögerungsgröße, insbesondere abhängig von erfaßten Raddrehzahlen, ermittelt wird. Der Verzögerungszustand des Fahrzeugs wird dann festgestellt, wenn die so ermittelte Verzögerungsgröße einen vorgebbaren oder vorgegebenen Schwellwert überschreitet.

Besonders vorteilhaft ist es, daß die von der erfaßten Drehzahl der Primärseite abhängige Einstellung der Motordrehzahl dann beendet wird, wenn der Verzögerungszustand nicht mehr festgestellt wird. Die erfindungsgemäße Einstellung bzw. Regelung der Motordrehzahl wird dann abgebrochen, wenn die Fahrzeugverzögerung einen bestimmten Wert unterschreitet.

Wie schon erwähnt, wird während des Verzögerungszustands die Getriebeübersetzung zu kürzen Übersetzungen hin verstellt.

Durch die Erfindung kann auch bei besonders starken Verzögerungen aus niedrigen Geschwindigkeiten (30 bis 60 km/h) sichergestellt werden, daß das Fahrzeug mit einem CVT-Getriebe bei einer Übersetzung nahe der Anfahrübersetzung zum stehen kommt. Außerdem kann der Motor mit Kraftstoff befeuert werden, um das Fördervolumen der Hydraulikpumpe zu erhöhen, ohne daß befürchtet werden muß, daß der Motor eine der Bremswirkung entgegenwirkende Leistung an die Räder bringt.

Vorteilhafte Ausgestaltungen der Erfindung sind den Unteransprüchen zu entnehmen.

### Zeichnung

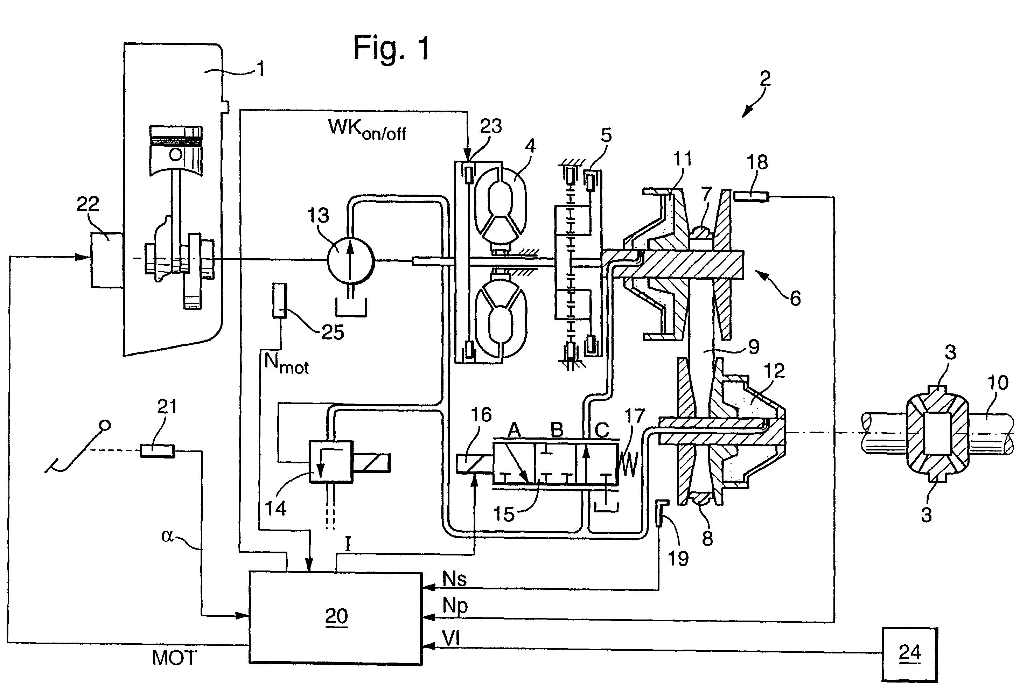

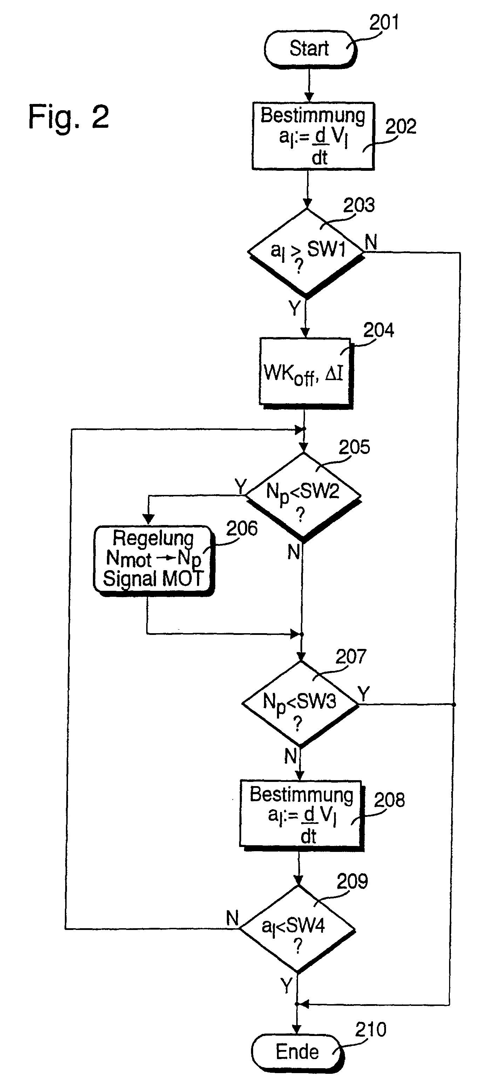

Die Figur 1 zeigt ein Übersichtsbild eines kontinuierlich verstellbaren Getriebes, während die Figur 2 ein Ablaufdiagramm darstellt.

### Ausführungsbeispiele

Die Erfindung soll im folgenden anhand eines Ausführungsbeispiels näher erläutert werden. In der Figur 1 ist dabei mit dem Bezugszeichen 2 ein stufenloses Umschlingungsgetriebe in Kraftfahrzeugen zum Zweck der Kraftübertragung vom Motor 1 zu den Antriebswellen 3 der Räder dargestellt. Ein solches stufenloses Getriebe hat beispielsweise einen Drehmomentwandler 4 und Kupplungen 5 für Vorwärts- und Rückwärtsfahrtumschaltungen, die zwischen dem Motor 1 und dem Variator 6 angeordnet sind. Der Wandler 4 kann mittels des Wandlerüberbrückungskupplung 23 bis hin zu einem schlupffreien Betrieb überbrückt werden. Das Öffnen und Schließen der Wandlerüberbrückungskupplung 23 ist dabei mit der Ansteuerung der Wandlerüberbrückungskupplung 23 durch das Signal Wkₒₙ/_{off} skizziert.

Die Betriebsabläufe des Fahrzeugmotors 1 werden durch das Motorsteuergerät 22 gesteuert beziehungsweise geregelt. Die Ausgangsdrehzahl Nmot des Motors 1, die der Eingangsdrehzahl des Wandlers 4 entspricht, wird durch den Drehzahlsensor 25 erfaßt. Die Fahrzeuglängsgeschwindigkeit Vl wird im Block 24, im allgemeinen abhängig von den sensorisch erfaßten Raddrehzahlen, ermittelt. Zur Einstellung einer bestimmten Ausgangsdrehzahl Nmot wird dem Motorsteuergerät 22 von der Einheit 20 das Signal Mot übermittelt.

Der Variator 6 besteht aus einem antriebs- (primären) und einem abtriebsseitigen (sekundären) Kegelscheibensatz 7 und 8, wobei mit Hilfe einer Kette oder eines Schubgliederbandes 9 die Kraft von dem Antriebs- 7 zum Abtriebsscheibensatz 8 übertragen wird. Jeder Kegelscheibensatz besteht aus einer axial feststehenden und einer axial beweglichen Scheibe. Durch gleichzeitige Variation der axial beweglichen Scheiben auf dem Antriebs- und dem Abtriebsscheibensatz ändert sich die Übersetzung des Variators 6 von einer hohen Anfahrübersetzung zu einer niedrigen Übersetzung Overdrive.

Der Abtriebsscheibensatz ist über ein Ausgleichsgetriebe 10 mit den Antriebswellen 3 der Räder verbunden. Die axial beweglichen Kegelscheiben 7 und 8 sind hydraulisch verstellbar und besitzen dazu die Ölkammern 11 und 12.

Zur Druckölversorgung besitzt das Getriebe eine Ölpumpe 13, die im allgemeinen mit der Drehzahl des Verbrennungsmotors 1 läuft. In einer möglichen Ausführungsform wird die Spannung des Bandes 9 mit Hilfe eines Druckbegrenzungsventils 14 eingestellt, welches den Druck in der abtriebsseitigen Ölkammer 12 reguliert. Die Getriebeübersetzung wird mit Hilfe eines Proportionalventils (Primärventil) 15 an der Primärseite eingestellt.

Dieses Primärventil 15 kann in der Stellung A Öl aus der antriebsseitigen Ölkammer 11 ablassen und somit den Druck vermindern, wodurch sich die Übersetzung nach Low verstellt. In der Stellung C fließt Öl in die antriebsseitige Ölkammer 11, wodurch sich die Übersetzung in Richtung Overdrive verändert und der Druck in der antriebsseitigen Ölkammer 11 ansteigt. In der Stellung B des Proportionalventils 15 ist die Ölkammer 11 abgedichtet, d. h. es kann nahezu kein Öl aus der Ölkammer 11 zu- oder abfließen. Das Proportionalventil 15 kann beispielsweise direktgesteuert sein oder durch ein Vorsteuerventil in bekannter Weise angesteuert werden.

In dem hier beschriebenen Ausführungsbeispiel wird durch Einstellen eines Stromes I in dem Magneten 16 eine Kraft auf den Ventilschieber erzeugt. Durch die am Ventilschieber vorhandene Feder 17 stellt sich eine bestimmte Stellung des Proportionalventils 15 ein. Das bedeutet, daß der Strom I durch den Magneten 16 die Stellung des Proportionalventils 15 und damit den Öffnungsquerschnitt des Ventils bestimmt.

Weiterhin existiert ein Sensor 18 zur Ermittelung der Primärdrehzahl Np und ein Sensor 19 zur Ermittelung der Sekundärdrehzahl Ns. Die Primär- und Sekundärsensorsignale Np und Ns werden einem Steuergerät 20 zugeführt, welches den Strom I durch den Magneten 16 des Proportionalventils 15 einstellt. Weiterhin ist beispielsweise ein Sensor 21 zur Ermittelung der Stellung a des vom Fahrer betätigbaren Fahrpedals angeschlossen.

Die Figur 2 zeigt einen Ablauf der Erfindung gemäß dem Ausführungsbeispiel. Nach dem Startschritt 201 wird im Schritt 202 aus der Fahrzeuglängsgeschwingkeit Vl die Fahrzeuglängsbeschleunigung al als zeitliche Ableitung der Fahrzeuglängsgeschwindigkeit bestimmt. Die Fahrzeuglängsgeschwindigkeit wird dabei im Block 24 der Figur 1 im allgemeinen abhängig von den Raddrehzahlen bestimmt.

Im Block 203 wird die so bestimmte Längsbeschleunigung mit einem ersten Schwellwert SW1, der beispielsweise 3,5 m/sec.² betragen kann, verglichen. Unterschreitet die Fahrzeuglängsbeschleunigung den Schwellwert SW1, so wird direkt zum Endschritt 210 übergegangen, da in diesem Fall keine hinreichend große Verzögerung des Fahrzeugs vorliegt. Überschreitet jedoch die Fahrzeuglängsverzögerung den Schwellwert SW1, so wird im Schritt 204 die Wandlerüberbrückungskupplung durch das Signal Wk_{off} geöffnet. Gleichzeitig wird die Getriebeübersetzung durch Ansteuerung ΔI des Ventils 15 möglichst schnell zu großen Übersetzungen hin verstellt. Im Schritt 205 wird abgefragt, ob die Getriebeeingangsdrehzahl, die Primärdrehzahl Np kleiner ist als ein Schwellwert SW2, beispielsweise 2500 Umdrehungen/Minute. Ist dies der Fall, so wird im Schritt 206 die Motorausgangsdrehzahl Nmot auf die Getriebeeingangsdrehzahl Np geregelt. Dies geschieht entweder direkt von der Einheit 20 aus oder durch eine entsprechende Ansteuerung der Motorsteuerung 22 durch das Signal Mot.

Wird im Schritt 205 jedoch festgestellt, daß die Drehzahlgrenze SW2 überschritten wird, so wird direkt zum Schritt 207 übergegangen. Durch die Abfrage 205 wird das Überschreiten einer oberen Drehzahlgrenze SW2 vermieden, indem der Motor oberhalb dieser Grenze kein Moment mehr erzeugt.

Im Schritt 207 wird die Getriebeeingangsdrehzahl Np mit einem dritten Schwellwert SW3, der beispielsweise 200 Umdrehungen größer ist als die Leerlaufdrehzahl des Motors, verglichen. Überschreitet die Getriebeeingangsdrehzahl den unteren Drehzahlschwert SW3 (Abfrageergebnis "Nein" im Block 207), so befindet sich die Getriebeeingangsdrehzahl noch hinreichend weit von der Leerlaufdrehzahl des Motors entfernt, woraufhin im Schritt 208 erneut die Fahrzeuglängsverzögerung al bestimmt wird.

Wird im Block 207 jedoch festgestellt, daß die Getriebeeingangsdrehzahl den unteren Schwellwert SW3 unterschreitet, so wird direkt zum Endschritt 210 übergegangen und die erfindungsgemäße Regelung abgebrochen.

Ist die Getriebeeingangsdrehzahl jedoch noch hinreichend weit von der Leerlaufdrehzahl des Motors entfernt, so wird nach der erneuten Bestimmung der Fahrzeuglängsverzögerung im Block 208 im Block 209 überprüft, ob die aktuelle Fahrzeuglängsverzögerung al einen vierten Schwellwert SW4, der beispielsweise 2 m/sec.2 betragen kann, unterschreitet. Ist die Fahrzeuglängsverzögerung noch hinreichend groß, dauert also der Bremsvorgang noch an (Abfrageergebnis "Nein" im Block 209), so wird mit der Ansteuerung der Blöcke 205 bzw. 206 die erfinderungsgemäße Regelung aufrechterhalten. Die Regelung wird mit Übergang zum Endschritt 210 dann abgebrochen, wenn im Block 209 bemerkt wird, daß die aktuelle Fahrzeuglängsverzögerung den vierten Schwellwert SW4 unterschreitet. In diesem Fall liegt kein Bremsvorgang hinreichender Größe mehr vor.

Nach dem Endschritt 210 wird der in der Figur 2 gezeigte Ablauf erneut gestartet.

Zusammenfassend ist zu bemerken, daß die Erfindung eine Verstellung der Übersetzung eines zwischen einem Fahrzeugmotor und den Antriebsrädern angeordneten und in seiner Übersetzung stufenlos verstellbaren Getriebes mit einer Primär- und Sekundärseite betrifft. Erfindungsgemäß sind Mittel vorgesehen, mittels der ein Verzögerungszustand des Fahrzeugs vorgebbarer oder vorgegebenen Ausmaßes festgestellt wird. In Reaktion auf die Feststellung eines solchen Verzögerungszustandes wird die Ausgangsdrehzahl des Fahrzeugmotors abhängig von der erfaßten Drehzahl der Primärseite eingestellt bzw. geregelt. Durch die Erfindung kann auch bei besonders starken Verzögerungen bei niederigen Geschwindigkeiten (30 bis 60 Stundenkilometern) sichergestellt werden, daß das Fahrzeug mit einem CVT-Getriebe bei einer Übersetzung nahe der Anfahrübersetzung zum Stillstand kommt. Außerdem kann der Motor mit Kraftstoff befeuert werden, um das Fördervolumen der Hydraulikpumpe zu erhöhen, ohne daß befürchtet werden muß, daß der Fahrzeugmotor eine der Bremswirkung entgegenwirkende Leistung an die Räder bringt.

## Patentansprüche

1. Vorrichtung zur Verstellung der Übersetzung eines zwischen einem Fahrzeugmotor (1) und den Antriebsrädern angeordneten und in seiner Übersetzung stufenlos verstellbaren Getriebes (2) mit einer Primär- und einer Sekundärseite (7, 8), bei dem wenigstens erste Sensormittel (18) zur Erfassung der Drehzahl (Np) der Primärseite (7) vorgesehen sind, wobei Mittel (20) vorgesehen sind, mittels der ein Verzögerungszustand des Fahrzeugs vorgebbaren oder vorgegebenen Ausmaßes festgestellt wird und in Reaktion auf die Feststellung des Verzögerungszustands die Ausgangsdrehzahl (Nmot) des Fahrzeugmotors (1) eingestellt wird, **dadurch gekennzeichnet daß** die Ausgangsdrehzahl (Nmot) des Fahrzeugmotors (1) abhängig von der erfaßten Drehzahl (Np) der Primärseite (7) eingestellt wird.

2. Vorrichtung nach Anspruch 1, **dadurch gekennzeichnet, daß** zweite Sensormittel (25) zur Erfassung der Ausgangsdrehzahl (Nmot) des Fahrzeugmotors (1) vorgesehen sind und die Ausgangsdrehzahl (Nmot) des Fahrzeugmotors (1) im Sinne einer Regelung auf die erfaßte Drehzahl (Np) der Primärseite (7) eingestellt wird.

3. Vorrichtung nach Anspruch 1, **dadurch gekennzeichnet, daß** die Einstellung der Ausgangsdrehzahl (Nmot) des Fahrzeugmotors (1) derart erfolgt, daß ein vorgebbarer oder vorgegebener zweiten Schwellwert (SW2) nicht überschritten wird.

4. Vorrichtung nach Anspruch 1, **dadurch gekennzeichnet, daß** die von der erfaßten Drehzahl (Np) der Primärseite (7) abhängige Einstellung der Ausgangsdrehzahl (Nmot) des Fahrzeugmotors (1) nur dann geschieht, wenn die Ausgangsdrehzahl (Nmot) des Fahrzeugmotors (1) und/oder die Drehzahl (Np) der Primärseite (7) einen vorgebbaren oder vorgegebenen dritten Schwellwert (SW3) nicht unterschreitet.

5. Vorrichtung nach Anspruch 1, **dadurch gekennzeichnet, daß** eine die Fahrzeuglängsgeschwindigkeit repräsentierende Verzögerungsgröße (al), insbesondere abhängig von erfaßten Raddrehzahlen, ermittelt wird, und der Verzögerungszustand des Fahrzeugs dann festgestellt wird, wenn die ermittelte Verzögerungsgröße (al) einen ersten vorgebbaren oder vorgegebenen Schwellwert (SW1) überschreitet.

6. Vorrichtung nach Anspruch 1, **dadurch gekennzeichnet, daß** die von der erfaßten Drehzahl (Np) der Primärseite (7) abhängige Einstellung der Ausgangsdrehzahl (Nmot) des Fahrzeugmotors (1) dann beendet wird, wenn der Verzögerungszustand nicht mehr festgestellt wird.

7. Vorrichtung nach Anspruch 1, **dadurch gekennzeichnet, daß** in Reaktion die Feststellung des Verzögerungszustands die Getriebeübersetzung zu kürzeren Übersetzungen hin verstellt wird.

8. Vorrichtung nach Anspruch 1, **dadurch gekennzeichnet, daß** zwischen dem Fahrzeugmotor (1) und dem Getriebe ein Momentenwandler (4) mit einer Wandlerüberbrückungskupplung (23) angeordnet ist und die Mittel (20) derart ausgestaltet sind, daß in Reaktion auf die Feststellung des Verzögerungszustands die Wandlerüberbrückungskupplung (23) geöffnet wird.

9. Verfahren zur Verstellung der Übersetzung eines zwischen einem Fahrzeugmotor (1) und den Antriebsrädern angeordneten und in seiner Übersetzung stufenlos verstellbaren Getriebes (2) mit einer Primär- und einer Sekundärseite (7, 8), bei dem wenigstens die Drehzahl (Np) der Primärseite (7) erfaßt wird, ein Verzögerungszustand des Fahrzeugs vorgebbaren oder vorgegebenen Ausmaßes festgestellt wird und in Reaktion auf die Feststellung des Verzögerungszustands die Ausgangsdrehzahl (Nmot) des Fahrzeugmotors (1) abhängig von der erfaßten Drehzahl (Np) der Primärseite (7) eingestellt wird, wobei insbesondere vorgesehen ist, daß die Ausgangsdrehzahl (Nmot) des Fahrzeugmotors (1) erfaßt wird und die Ausgangsdrehzahl (Nmot) des Fahrzeugmotors (1) im Sinne einer Regelung auf die erfaßte Drehzahl (Np) der Primärseite (7) eingestellt wird.

10. Verfahren nach Anspruch 9, **dadurch gekennzeichnet, daß** zwischen dem Fahrzeugmotor (1) und dem Getriebe ein Momentenwandler (4) mit einer Wandlerüberbrückungskupplung (23) angeordnet ist und in Reaktion auf die Feststellung des Verzögerungszustands die Wandlerüberbrückungskupplung (23) geöffnet wird.

## Claims

1. Device for adjusting the ratio of a transmission (2) of continuously variable ratio, which is arranged between a vehicle engine (1) and the driving wheels and which has a primary and a secondary side (7, 8), and in which at least first sensor means (18) for detecting the rotational speed (Np) of the primary side (7) are provided, means (20) being provided, by which a deceleration state of the vehicle of predeterminable or predetermined extent is ascertained, and, in reaction to the ascertainment of the deceleration state, the initial rotational speed (Nmot) of the vehicle engine (1) is set, **characterized in that** the initial rotational speed (Nmot) of the vehicle engine (1) is set as a function of the detected rotational speed (Np) of the primary side (7).

2. Device according to Claim 1, **characterized in that** second sensor means (25) for detecting the initial rotational speed (Nmot) of the vehicle engine (1) are provided, and the initial rotational speed (Nmot) of the vehicle engine (1) is set by automatic control to the detected rotational speed (Np) of the primary side (7).

3. Device according to Claim 1, **characterized in that** the setting of the initial rotational speed (Nmot) of the vehicle engine (1) is carried out in such a way that a predeterminable or predetermined second threshold value (SW2) is not exceeded.

4. Device according to Claim 1, **characterized in that** the setting of the initial rotational speed (Nmot) of the vehicle engine (1), the said setting being a function of the detected rotational speed (Np) of the primary side (7), takes place only when the initial rotational speed (Nmot) of the vehicle engine (1) and/or the rotational speed (Np) of the primary side (7) does not fall short of a predeterminable or predetermined third threshold value (SW3).

5. Device according to Claim 1, **characterized in that** a deceleration variable (al), representing the vehicle longitudinal speed is established, particularly as a function of the detected wheel rotational speeds, and the deceleration state of the vehicle is ascertained when the established deceleration variable (al) exceeds a first predeterminable or predetermined threshold value (SW1).

6. Device according to Claim 1, **characterized in that** the setting of the initial rotational speed (Nmot) of the vehicle engine (1), the said setting being a function of the detected rotational speed (Np) of the primary side (7), is terminated when the deceleration state is no longer ascertained.

7. Device according to Claim 1, **characterized in that**, in reaction to the ascertainment of the deceleration state, the transmission ratio is adjusted towards shorter ratios.

8. Device according to Claim 1, **characterized in that** a torque converter (4) with a converter lock-up clutch (23) is arranged between the vehicle engine (1) and the transmission, and the means (20) are designed in such a way that, in reaction to the ascertainment of the deceleration state, the converter lock-up clutch (23) is opened.

9. Method for adjusting the ratio of a transmission (2) of continuously variable ratio, which is arranged between a vehicle engine (1) and the driving wheels and has a primary and a secondary side (7, 8), and in which at least the rotational speed (Np) of the primary side (7) is detected, a deceleration state of the vehicle of predeterminable or predetermined extent is ascertained, and, in reaction to the ascertainment of the deceleration state, the initial rotational speed (Nmot) of the vehicle engine (1) is set as a function of the detected rotational speed (Np) of the primary side (7), there being provision, in particular, for the initial rotational speed (Nmot) of the vehicle engine (1) to be detected and for the initial rotational speed (Nmot) of the vehicle engine (1) to be set by automatic control to the detected rotational speed (Np) of the primary side (7).

10. Method according to Claim 9, **characterized in that** a torque converter (4) with a converter lock-up clutch (23) is arranged between the vehicle engine (1) and the transmission, and, in reaction to the ascertainment of the deceleration state, the converter lock-up clutch (23) is opened.

## Revendications

1. Dispositif pour le réglage du rapport de transmission d'une boîte de vitesses (2) disposée entre un moteur de véhicule (1) et les roues motrices et présentant un rapport de transmission réglable en continu, avec un côté primaire et un côté secondaire (7, 8), dans lequel il est prévu au moins des premiers moyens de détection (18) pour détecter la vitesse de rotation (Np) du côté primaire (7), des moyens (20) au moyen desquels on observe un état de ralentissement du véhicule dans une mesure pré-déterminable ou prédéterminée et, en réaction à l'observation de l'état de ralentissement, on règle la vitesse de rotation de sortie (Nmot) du moteur de véhicule (1),
**caractérisé en ce que**
la vitesse de rotation de sortie (Nmot) du moteur de véhicule (1) est réglé en fonction de la vitesse de rotation détectée (Np) du côté primaire (7).

2. Dispositif selon la revendication 1,
**caractérisé en ce que**
des seconds moyens de détection (25) sont prévus pour détecter la vitesse de rotation de sortie (Nmot) du moteur de véhicule (1) et la vitesse de rotation de sortie (Nmot) du moteur de véhicule (1) est réglée dans le sens d'une régulation sur la vitesse de rotation détectée (Np) du côté primaire (7).

3. Dispositif selon la revendication 1,
**caractérisé en ce que**
le réglage de la vitesse de rotation de sortie (Nmot) du moteur de véhicule (1) est effectué de telle façon qu'une deuxième valeur de seuil (SW2) pré-déterminable ou prédéterminée ne soit pas dépassée.

4. Dispositif selon la revendication 1
**caractérisé en ce que**
le réglage de la vitesse de rotation de sortie (Nmot) du moteur de véhicule (1) en fonction de la vitesse de rotation détectée (Np) du côté primaire (7) ne se produit que si la vitesse de rotation de sortie (Nmot) du moteur de véhicule (1) et/ou la vitesse de rotation (Np) du côté primaire (7) ne dépasse pas une troisième valeur de seuil (SW3) pré-déterminable ou prédéterminée.

5. Dispositif selon la revendication 1,
**caractérisé en ce que**
l'on détecte une grandeur de ralentissement (al) représentant la vitesse longitudinale du véhicule, en particulier en fonction de vitesses de rotation détectées des roues, et on observe l'état de ralentissement du véhicule lorsque la grandeur de ralentissement détectée (al) dépasse une première valeur de seuil (SW1) pré-déterminable ou prédéterminée.

6. Dispositif selon la revendication 1,
**caractérisé en ce que**
l'on met fin au réglage de la vitesse de rotation de sortie (Nmot) du moteur de véhicule (1) en fonction de la vitesse de rotation détectée (Np) du côté primaire (7) lorsque l'on n'observe plus l'état de ralentissement.

7. Dispositif selon la revendication 1,
**caractérisé en ce que**
l'on change le rapport de transmission du changement de vitesses vers des rapports de transmission plus courts, en réaction à l'observation de l'état de ralentissement.

8. Dispositif selon la revendication 1,
**caractérisé en ce qu'**
un convertisseur de couple (4) avec un accouplement de pontage du convertisseur (23) est disposé entre le moteur de véhicule (1) et la boîte de vitesses, et les moyens (20) sont configurés de telle façon que l'accouplement de pontage du convertisseur (23) s'ouvre en réaction à l'observation de l'état de ralentissement.

9. Procédé pour le réglage du rapport de transmission d'une boîte de vitesses (2) disposée entre un moteur de véhicule (1) et les roues motrices et présentant un rapport de transmission réglable en continu, avec un côté primaire et un côté secondaire (7, 8),
dans lequel on détecte au moins la vitesse de rotation (Np) du côté primaire (7), on observe un état de ralentissement du véhicule dans une mesure pré-déterminable ou prédéterminée, et on règle la vitesse de rotation de sortie (Nmot) du moteur de véhicule (1) en fonction de la vitesse de rotation détectée (Np) du côté primaire (7) en réaction à l'observation de l'état de ralentissement,
dans lequel
il est prévu en particulier que l'on détecte la vitesse de rotation de sortie (Nmot) du moteur de véhicule (1) et que l'on règle la vitesse de rotation de sortie (Nmot) du moteur de véhicule (1) dans le sens d'une régulation sur la vitesse de rotation détectée (Np) du côté primaire (7).

10. Procédé selon la revendication 9,
**caractérisé en ce qu'**
un convertisseur de couple (4) avec un accouplement de pontage du convertisseur (23) est disposé entre le moteur de véhicule (1) et la boîte de vitesses, et l'accouplement de pontage du convertisseur (23) s'ouvre en réaction à l'observation de l'état de ralentissement.
